# EUROPEAN PATENT SPECIFICATION

(11) **EP 4 024 782 B1**
(45) Date of publication and mention of the grant of the patent: **25.06.2025**
(21) Application number: 20860842.2
(22) Date of filing: 04.09.2020
(51) Int. Cl.: H04L 45/302, H04L 45/00, H04L 45/50

(54) **METHOD BY WHICH HOST NETWORK PERFORMANCE REQUIREMENTS MAY BE PROGRAMMED AND DEVICE**
VERFAHREN, DURCH DAS ANFORDERUNGEN AN DIE LEISTUNGSFÄHIGKEIT EINES HOST-NETZWERKS PROGRAMMIERT WERDEN KÖNNEN UND VORRICHTUNG
PROCÉDÉ PAR LEQUEL DES EXIGENCES DE PERFORMANCE DE RÉSEAU HÔTE PEUVENT ÊTRE PROGRAMMÉES ET DISPOSITIF

(30) Priority: 06.09.2019 CN 201910844539
(43) Date of publication of application: 06.07.2022
(73) Proprietor: Huawei Technologies Co., Ltd., Longgang District Shenzhen, Guangdong 518129 (CN)
(72) Inventor: DONG, Jie, Shenzhen, Guangdong 518129 (CN); DU, Zongpeng, Shenzhen, Guangdong 518129 (CN)
(74) Representative: Gill Jennings & Every LLP
(86) International application number: PCT/CN2020/113363
(87) International publication number: WO 2021/043232

(56) References cited:
- WO-A1-2019/005949
- CN-A- 105 871 721
- CN-A- 109 218 201
- CN-A- 109 561 021
- CN-A- 109 981 457
- CN-A- 109 981 458
- DUGEON OLIVIER ET AL: "Demonstration of Segment Routing with SDN based label stack optimization", 2017 20TH CONFERENCE ON INNOVATIONS IN CLOUDS, INTERNET AND NETWORKS (ICIN), IEEE, 7 March 2017 (2017-03-07), pages 143 - 145, XP033085368, DOI: 10.1109/ICIN.2017.7899404
- PIER LUIGI VENTRE ET AL: "Segment Routing: a Comprehensive Survey of Research Activities, Standardization Efforts and Implementation Results", ARXIV.ORG, CORNELL UNIVERSITY LIBRARY, 201 OLIN LIBRARY CORNELL UNIVERSITY ITHACA, NY 14853, 6 April 2019 (2019-04-06), XP081585466
- C. FILSFILS, ED.: "Segment Routing Architecture", INTERNET ENGINEERING TASK FORCE (IETF), 10 December 2015 (2015-12-10), pages 1 - 6, XP055788643, ISSN: 2070-1721, DOI: 10.1109/GLOCOM.2015.7417124

## Description

### TECHNICAL FIELD

This application relates to the communication field, and in particular, to a method for making a host network performance requirement in a segment routing (segment routing, SR) network programmable, a device, and a system.

### BACKGROUND

SR is a protocol for data packet forwarding on a network that is designed based on a source routing concept, and supports explicit specification of a forwarding path of a data packet on a source network device. DUGEON OLIVIER ET AL: "Demonstration of Segment Routing with SDN based label stack optimization", 2017 20TH CONFERENCE ON INNOVATIONS IN CLOUDS, INTERNET AND NETWORKS (ICIN), IEEE, 7 March 2017 (2017-03-07), pages 143-145, describes a path computation module and a client's path computation request including QoS requirements.
PIER LUIGI VENTRE ET AL: "Segment Routing: a Comprehensive Survey of Research Activities, Standardization Efforts and Implementation Results", ARXIVORG, CORNELL UNIVERSITY LIBRARY, 201 OLIN LIBRARY CORNELL UNIVERSITY ITHACA, NY 14853, 6 April 2019 describes segment routing.
CN 105 871 721 A describes a segment routing processing method.
CN 109 218 201 A describes a method for generating a forwarding table entry and a network device.

### SUMMARY

This application provides a packet sending method and a device, so that a host that sends a packet is supported in directly imposing a programmable network performance requirement to an SR network, to resolve a technical problem that a configured network performance requirement is not flexible enough. The invention is defined in the appended claims.

### BRIEF DESCRIPTION OF DRAWINGS

FIG. 1 is a schematic diagram of an example network scenario;
FIG. 2 shows a packet sending method according to an embodiment of the present invention;
FIG. 3 shows a format of an RA packet according to an embodiment of the present invention;
FIG. 4 shows a structure of a segment identifier according to an embodiment of the present invention;
FIG. 5 shows a format of a packet header according to an embodiment of the present invention;
FIG. 6 is a schematic diagram of a structure of a network device according to an embodiment of the present invention;
FIG. 7 is a schematic diagram of a structure of a network device according to an embodiment of the present invention;
FIG. 8 is a schematic diagram of a structure of a network device according to an embodiment of the present invention;
FIG. 9 is a schematic diagram of a structure of a network device according to an embodiment of the present invention; and
FIG. 10 is a schematic diagram of a structure of a network system according to an embodiment of the present invention.

### DESCRIPTION OF EMBODIMENTS

The following describes embodiments of the present invention with reference to accompanying drawings.

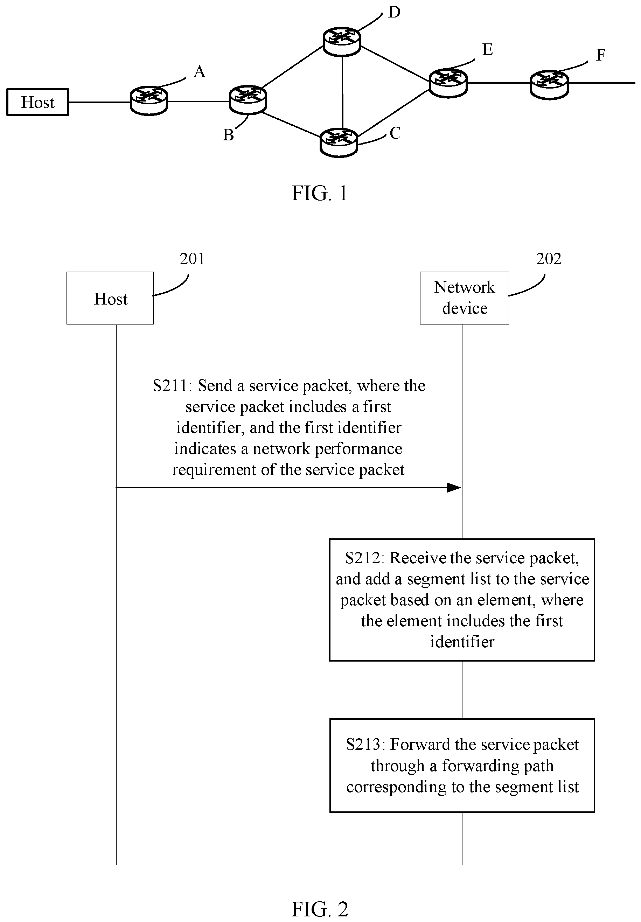

FIG. 1 shows a possible application scenario. The scenario includes an SR network. The network includes several network devices, such as a network device A, a network device B, a network device C, a network device D, a network device E, and a network device F. The network devices may be routers, switches, or forwarders in a software-defined networking (software-defined networking, SDN) structure. The network device A is a gateway of a host. In this embodiment of the present invention, the gateway is configured to transfer a data packet between two networks. For example, the gateway may connect two networks that use different protocols, and may translate and convert data that uses different transmission protocols in two network segments. The host is connected to the SR network by using the network device A. The network device A guides traffic from the host to be forwarded through a specific forwarding path. The host may be a terminal device, such as a personal computer, a mobile phone, or a tablet computer. The host may alternatively be a service providing computer, such as a server.

Embodiments of the present invention provide a packet sending method, and a device that is based on the method. The method and the device are based on a same inventive concept. Principles of resolving problems by the method and device are similar. Therefore, for the embodiments of the method and the device refer to each other, and same or similar content is not described again.

As shown in FIG. 2, an embodiment of the present invention provides a packet sending method. In this method, a gateway device in an SR network directly receives a network performance requirement imposed by a host, so that a manner of obtaining a network performance requirement is more flexible. In the embodiment shown in FIG. 2, a host 201 may be the host in FIG. 1, and a network device 202 may be a gateway in the SR network, for example, the network device A in FIG. 1. The method includes the following steps.

S211: The host 201 sends a service packet to the network device 202, where the service packet includes a first identifier, and the first identifier indicates a network performance requirement of the service packet.

The service packet may be a service packet generated by the host 201. Specifically, the service packet may be a service packet generated by an application program that is run by the host 201. The host 201 may be a terminal device such as a personal computer, a mobile phone, or a tablet computer. The host 201 may run different application programs. These application programs may separately generate different service packets. For example, the host 201 runs an application program 1 and an application program 2, and the application program 1 and the application program 2 are different application programs. The application program 1 generates a service packet 1; in other words, the service packet 1 is a service packet of the application program 1. The application program 2 generates a service packet 2; in other words, the service packet 2 is a service packet of the application program 2.

The service packet carries an identifier indicating a network performance requirement of the service packet. The network performance requirement of the service packet may be a service level agreement (Service Level Agreement, SLA) requirement, such as a low delay, high bandwidth, or a minimum quantity of hops on a path. An identifier value carried in the service packet may indicate the SLA requirement. For example, a mapping relationship may be established between each SLA requirement and each identifier value, so that each identifier value may be used to indicate one SLA requirement. For example, a color attribute value of the SLA requirement may alternatively be used as the identifier value carried in the service packet. Each SLA requirement may be represented by one color attribute, each color attribute is mapped to one specific value, and a correspondence between the color attribute and the specific value is unified in an entire network. For example, a network performance requirement for a low delay may be represented by green, and a corresponding value is 20. For example, a network performance requirement for high bandwidth may be represented by blue, and a corresponding value is 40. The identifier value carried in the service packet may be the specific value to which the color attribute is mapped, for example, 20. Optionally, the network performance requirement may alternatively be a network performance argument value, and the identifier value carried in the service packet is the argument value. For example, if the network performance requirement is that an upper limit of an end-to-end delay is 10 ms, the identifier value carried in the service packet may be 10; and if the network performance requirement is that bandwidth is 100 M, the identifier value carried in the service packet may be 100. Optionally, the identifier value carried in the service packet is an identifier of a packet forwarding path that meets the network performance requirement. For example, if the packet forwarding path that meets the network performance requirement is a first path, and an identifier of the first path in a network is path A, the identifier value carried in the service packet may be A. Optionally, the service packet may include a plurality of network performance requirements at the same time.

In addition, different service packets may carry different identifiers, and service packets of different application programs may also carry different identifiers. For example, when the service packet 1 generated by the application program 1 includes a first identifier, and a value of the first identifier is 20, a green color attribute is indicated; in other words, a network performance requirement of the service packet 1 is a low delay; and when the service packet 2 generated by the application program 2 includes a second identifier, and a value of the second identifier is 40, a blue color attribute is indicated; in other words, a network performance requirement of the service packet 2 is high bandwidth. Therefore, by adding an identifier indicating the network performance requirement to the service packet, the host 201 can directly impose a network performance requirement of the host 201. This is more flexible. In addition, different network performance requirements can be imposed for different service packets, or different network performance requirements can be imposed based on different application programs.

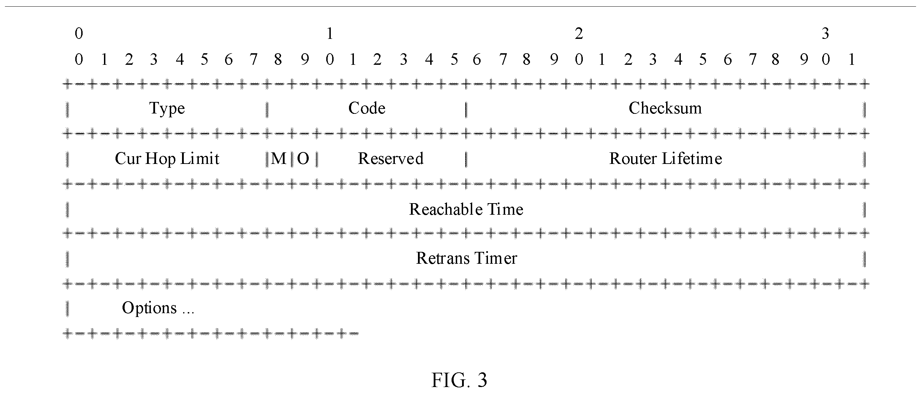

In the current invention, before the host 201 obtains the service packet including the first identifier, the network device 202 sends a control packet to the host 201 to notify the host 201 that the host 201 can impose the network performance requirement of the host 201. The control packet may be a router advertisement (router advertisement, RA) packet in a neighbor discovery protocol (Neighbor Discovery Protocol, NDP). An RA packet is periodically sent by a gateway to the host, or is sent in response to a router solicitation (router solicitation) packet of the host, and is used to notify the host of related information of the gateway. With reference to the application scenario shown in FIG. 1, the host 201 is the host shown in FIG. 1, and the network device 202 is a gateway of the host, namely, the network device A. The network device A sends the RA packet to the host to notify related information of the gateway. FIG. 3 shows a format of the RA packet. The RA packet includes a type (Type) field, a code (Code) field, a checksum (Checksum) field, a cur hop limit (Cur Hop Limit) field, an M flag bit, an O flag bit, a reserved (Reserved) field, a router lifetime (Router Lifetime) field, a reachable time (Reachable Time) field, a retrans timer (Retrans Timer) field, and an options (Options) field. The network device A may extend the RA packet. Optionally, the network device A may set an enable flag in the options field, and the enable flag may be a type field of a specific value. For example, the network device A may add an option whose type value is 38 to the options field as the enable flag. After receiving the RA packet, the host reads the option whose type value is 38 from the options field, in other words, the host learns that the host may add the first identifier to the service packet sent to the network device A, to impose the network performance requirement of the host.

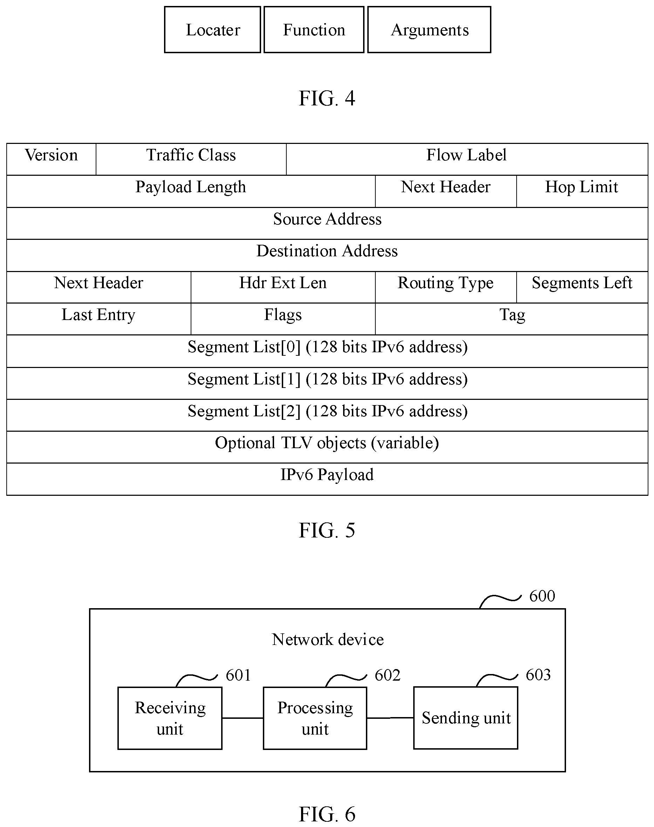

When the SR network may be an SRv6 network, the network device 202 may further notify, by using the control packet, the host 201 of an SRv6 network function of receiving the network performance requirement. In the service packet generated by the host 201, the network performance requirement is carried as an argument of the function. Further, when the service packet is sent by the host 201 to the network device 202, the network device 202 may receive and process the network performance requirement in the service packet by using the function. The SRv6 network has a plurality of functions. Each function includes a corresponding operation step used to implement a specific function. A related argument may be involved in the operation step of the function. Each function may be represented by a function field that is of a specific value and that is included in a SID. Each argument may alternatively be represented by an argument field that is of a specific value and that is included in a SID, and the argument field representing the argument is usually placed after a function field representing the function. Optionally, a plurality of arguments are involved in each function. Correspondingly, a function field representing the function may be followed by a plurality of different argument fields representing different arguments. As shown in FIG. 4, the SID in the SRv6 network may include two parts: a locator (Locator) field and a function (Function) field. The locator field includes a network device address prefix used to locate a specific network device. The function field includes a function (Function) that is of the SRv6 network and that is implemented by the network device and an argument (Argument) involved in the function. The argument is optional. When the argument is not involved in the function, the argument field does not include the argument. Generally, a total length of the SID is 128 bits. The locator field and the function field are separately of specific lengths, and these specific lengths may be changed through network setting. For example, the locator field is 64 bits, and the function field is 64 bits; or the locator field is 48 bits, and the function field is 80 bits. In a process of processing the SID, the network device queries a local segment identifier table (local SID table), where the local segment identifier table includes a mapping relationship between a function and a function field of a specific value; and the network device determines, from the local segment identifier table and based on the function field of the specific value, a function represented by the function field of the specific value. When the function field of the SID includes only the function, or when the function field of the SID includes the function and the argument involved in the function, the corresponding function may be determined based on the function field of the SID in the local segment identifier table. For example, a function field entry that is in the local area identity table and that represents the function of receiving the network performance requirement is B112:0000:0000:0000, and the function field that carries the argument is B112:0020:0000:0000. The network device determines that the function represented by the function field is receiving the network performance requirement, and identifies, based on a format in which the function carries the argument, that 0020 in the function field is the argument and represents the network performance requirement for a low delay. Optionally, the function field of the SID may carry a plurality of arguments. For example, the function field that carries the argument may be B112:0020:0010:0100. The network device determines that the function represented by the function field is receiving the network performance requirement, and identifies, based on the format in which the function carries the argument, that 0020, 0010, and 0100 in the function field are arguments and respectively represents a low delay, an upper limit of an end-to-end delay of 10 ms, and a bandwidth requirement of 100 M. Optionally, the function of receiving the network performance requirement may be a variation (variation) of an End.B6.Insert function, or the function of receiving the network performance requirement may be a variation of an End.B6.Encaps function.

For example, the control packet sent by the network device 202 to the host 201 may include a second identifier, and a value of the second identifier may be a function field that is of a specific value and that corresponds to the function of receiving the network performance requirement. Optionally, the control packet further includes a description field used to describe a correspondence between the function of receiving the network performance requirement and the function field of the specific value. For example, the description field may be a specific field in the RA packet. For example, the description field may be an SRV6 endpoint function (Endpoint Function) field in the RA packet. The host 201 generates a service packet that includes the first identifier and the second identifier. Optionally, the second identifier and the first identifier may be included in a same SID of the service packet, the second identifier and the first identifier may be included in a function field of the SID, the value of the second identifier is used to indicate the function of receiving the network performance requirement, the value of the first identifier is used to indicate the network performance requirement, and the value of the first identifier is used as the argument of the function. Optionally, a locator field of the SID in the service packet may include an address prefix of the network device 202; in other words, the SID in the service packet is a segment identifier of the network device 202. In this embodiment of the present invention, that the SID is the segment identifier of the network device 202 means that the locator field of the SID includes the address prefix of the network device 202. For example, the SID may be a node segment identifier (node SID) of the network device 202, or may be an adjacent segment identifier (adjacent SID) of a link of the network device 202. The foregoing descriptions of the segment identifier are also applicable to another network device other than the network device 202. Optionally, the second identifier may be included in a SID of the control packet. Optionally, the second identifier may be included in a function field of the SID. Optionally, a locator field of the SID in the control packet may include the address prefix of the network device 202; in other words, the SID in the control packet is a segment identifier of the network device 202.

An example is provided for description with reference to the application scenario shown in FIG. 1. The network device A sends an RA packet to the host, and an options field of the RA packet includes an enable flag whose type value is 38. The RA packet further includes a segment identifier SID A1 of the network device A. For example, the SID A1 is 1111:0000:0000:0000:B112:0000:0000:0000/h, a length is 128 bits, and "/h" indicates that this value is represented in hexadecimal. The first 64 bits are a locator field, namely, 1111:0000:0000:0000, and match an address prefix of the network device A. The last 64 bits are a function field, namely, B112:0000:0000:0000, and include a second identifier B112::, where "::" represents all 0, and a value of the second identifier represents the function of receiving the network performance requirement. The host receives the RA packet sent by the network device A, reads the enable flag whose type value is 38 from the RA packet, and learns that the host can directly impose the network performance requirement to the network device A. In other words, the service packet sent to the network device A carries the first identifier indicating the network performance requirement. The host reads the second identifier B112:: from the RA packet, obtains, from an SRV6 Endpoint Function field of the RA packet, a correspondence between a value of the second identifier and the function of receiving the network performance requirement, and determines that a function represented by the second identifier is receiving the network performance requirement. The host generates a service packet 1 that includes the first identifier and the second identifier. Specifically, the service packet 1 may include a segment identifier SID A2 of the network device A, and the SID A2 is 1111:0000:0000:0000:B112:0020:0000:0000. B112:0020:0000:0000 is the function field, and includes a second identifier B112 and a first identifier 0020, where a value of the first identifier is 20/h, and indicates that a network performance requirement of the service packet 1 is a low delay. Therefore, the host directly expresses the network performance requirement of the host by setting the first identifier in the service packet 1.

Further, the segment identifier that is of the network device 202 and that includes the first identifier and the second identifier may be included in a segment list in a segment routing header (segment routing header, SRH) of the service packet. FIG. 5 shows a format of an IPv6 packet header and a format of an SRH, and the SRH is located after the IPv6 packet header. The IPv6 packet header includes a version (Version) field, a traffic class (Traffic Class) field, a flow label (Flow Label) field, a payload length (Payload Length) field, a next header (Next Header) field, a hop limit (Hop Limit) field, a source address (Source Address) field, and a destination address (Destination Address, DA) field. The SRH includes a next header (Next Header) field, a header extension length (Hdr Ext Len) field, a routing type (Routing Type) field, a segments left (Segments Left) field, a last entry (Last Entry) field, a flags (Flags) field, a tag (Tag) field, a segment list (Segment List) field, and an optional type-length-value objects (Optional TLV objects) field. After generating the service packet, the host 201 encapsulates the segment list into an SRH of the service packet, and transmits the encapsulated service packet. The segment list includes a first segment identifier and a second segment identifier, and the first segment identifier may be the segment identifier of the network device 202. In the current invention, the segment identifier of the network device 202 includes a locator field and a function field, the locator field includes the address prefix of the network device 202, and the function field includes the first identifier and the second identifier. The second segment identifier includes a destination address of the service packet, and the destination address is an address prefix of a receiving device of the service packet.

An example is provided for description with reference to the application scenario shown in FIG. 1. The host sends the service packet 1 to the network device A, a destination address of the service packet 1 is a receiving device X, and the service packet 1 includes a segment list 1, namely, a SID list 1. The SID list 1 includes two segment identifiers: a SID X and a SID A2. The SID A2 is the segment identifier of the network device A, and the SID A2 may be 1111:0000:0000:0000:B112:0020:0000:0000, where a locator field includes the address prefix of the network device A, and a function field includes the second identifier and the first identifier. The SID X may be 1234:5678:0000:0000:0000:0000:0000:0000, a length is 128 bits, and the first 64 bits are a locator field and include an address prefix of the receiving device X, namely, 1234:5678:0000:0000/64, which is also the destination address of the service packet 1. Optionally, the SID X may alternatively be a conventional IPv6 address, such as 2001:0db8:85e3:0000:0000:8a2e:0370:7334.

S212: The network device 202 receives the service packet from the host 201, and adds a segment list to the service packet based on the first identifier in the service packet, where a forwarding path corresponding to the segment list meets the network performance requirement of the service packet. As a gateway device of the host 201, the network device 202 receives the service packet from the host 201, adds the segment list to the service packet, and further forwards the service packet through the forwarding path corresponding to the segment list. In this process, the network device 202 adds the segment list to the service packet based on the first identifier, and the forwarding path corresponding to the added segment list also meets the network performance requirement of the service packet. Therefore, it is ensured that the service packet is forwarded through the forwarding path that meets the network performance requirement of the service packet, and a network service is more targeted. Optionally, when the network device 202 adds the segment list to the service packet, in addition to the first identifier in the service packet, elements that need to be considered include a destination address of the service packet; in other words, the network device 202 adds the segment list to the service packet based on the destination address of the service packet and the first identifier. The destination address of the service packet is an address prefix of a receiving device of the service packet.

An example is provided for description with reference to the application scenario shown in FIG. 1. The network device A receives the service packet 1 sent by the host, a destination address of the service packet 1 is a receiving device X, the service packet 1 includes the first identifier, and a value of the first identifier is 20 and indicates the network performance requirement for a low delay. The network device A determines, based on the destination address and the first identifier, a segment list to be added to the service packet 1. For example, the network device A may obtain a mapping relationship between the segment list and a combination of the destination address and the network performance requirement, as shown in Table 1. A segment list obtained by the network device A based on the destination address and the first identifier by using Table 1 is a SID list 2, and the SID list 2 includes a SID B, a SID D, a SID E, and a SID F that are respectively segment identifiers of the network device B, the network device D, the network device E, and the network device F. In other words, a forwarding path corresponding to the SID list 2 reaches the network device F after passing through the network device B, the network device D, and the network device E. This forwarding path is a forwarding path that meets the network performance requirement for a low delay. The network device A adds the SID list 2 to the service packet 1, to guide forwarding of the service packet 1. Therefore, a service provided by the network can meet the network performance requirement directly imposed by the service packet 1, and a manner of imposing the network performance requirement is more flexible.

**Table 1**

| Combination of destination address and network performance requirement | Segment list |
|---|---|
| Destination address: 1234:5678:0000:0000/64 Network performance requirement: 20 | SID list 2: [SID B, SID D, SID E, SID F] |
| Destination address: 1234:5678:0000:0000/64 Network performance requirement: 40 | SID list 3: [SID B, SID C, SID E, SID F] |

With reference to the foregoing descriptions, when the function field that is of the specific value and that corresponds to the function of receiving the network performance requirement is carried in the service packet, the network device 202 receives, by using the function, the network performance requirement imposed by the host 201, and adds the segment list to the service packet based on the network performance requirement. The forwarding path corresponding to the segment list meets the network performance requirement of the service packet.

An example is provided for description with reference to the application scenario shown in FIG. 1. The network device A receives the service packet 1 sent by the host, and processes a segment list in an SRH of the service packet 1. The segment list may be the foregoing SID list 1 that includes the SID X and the SID A2, the SID X is a segment identifier of a receiving device X, and is specifically 1234:5678:0000:0000:0000:0000:0000:0000, and the SID A2 is a segment identifier of the network device A, and is specifically 1111:0000:0000:0000:B112:0020:0000:0000. The network device A obtains the SID A2 from a DA field, obtains 1111:0000:0000:0000:B112:0000:0000:0000 entry of the local SID table through matching, determines a function field in the entry, namely, B112, and executes a function represented by the function field. A specific process in which the network device A executes the function represented by the function field may include: reading an argument field after the function field, and obtaining a value that is in the argument field and that represents the network performance requirement, that is, a value 20; finding a final destination address of the service packet in the segment list based on an updated SL, that is, the segment identifier SID X of the receiving device X; obtaining a corresponding segment list from the foregoing Table 1 based on the value 20 and the SID X, that is, the SID list 2; and adding the SID list 2 to the service packet 1 to guide forwarding of the service packet 1.

With reference to the foregoing descriptions, the function of receiving the network performance requirement may be a variant of an End.B6.Insert function, and a specific execution process of the function includes: inserting the segment list as a new SRH header. Alternatively, the function of receiving the network performance requirement may be a variation of an End.B6.Encaps function, and a specific execution process of the function includes: encapsulating a new IPv6 packet header for the packet and inserting an SRH header that carries the segment list.

For example, the network device 202 may receive different service packets, and the different service packets include different network performance requirements. The network device 202 adds different segment lists to the different service packets based on the different network performance requirements, so that the different service packets are sent through forwarding paths that meet network performance requirements of the service packets.

An example is provided for description with reference to the application scenario shown in FIG. 1. The network device A receives the service packet 1 and the service packet 2 sent by the host, and both a final destination address of the service packet 1 and a final destination address of the service packet 2 are a receiving device X. The service packet 1 includes a first identifier, and a value of the first identifier is 20, indicating the network performance requirement for a low delay. The service packet 2 includes a third identifier, and a value of the third identifier is 40, indicating a network performance requirement for high bandwidth. For example, the network device A may obtain a mapping relationship between different segment lists and different combinations of destination addresses and network performance requirements, as shown in Table 1. The network device A separately determines forwarding paths of the service packet 1 and the service packet 2 based on the destination addresses and network performance requirements of the service packet 1 and the service packet 2. Specifically, the segment list obtained by the network device A based on the destination address and the first identifier in the service packet 1 by using Table 1 is a SID list 2. A specific case is the same as that of the foregoing SID list 2. The network device A adds the SID list 2 to the service packet 1, to guide forwarding of the service packet 1. In addition, a segment list further obtained by the network device A based on the destination address and the third identifier in the service packet 2 by using Table 1 is a SID list 3 including a SID B, a SID C, a SID E, and a SID F that are respectively segment identifiers of the network device B, the network device C, the network device E, and the network device F. In other words, a forwarding path corresponding to the SID list 3 reaches the network device F after passing through the network device B, the network device C, and the network device E, and is a forwarding path that meets the network performance requirement for high bandwidth. The network device A adds the SID list 3 to the service packet 2, to guide forwarding of the service packet 2. It can be learned that the service packet 1 and the service packet 2 impose different network performance requirements. The network device A can provide different forwarding paths for different network performance requirements in different service packets. Therefore, in an entire network, a manner of imposing the network performance requirement is more flexible.

It may be understood that Table 1 merely provides an example of the mapping relationship between a segment list and a combination of a final destination address and a network performance requirement. The mapping relationship between a combination of a final destination address and a network performance requirement and a segment list may be in a variety of forms. For example, the final destination address may be represented by a segment identifier of the receiving device X or other identification information of the receiving device X, and the network performance requirement information may also be represented by a color attribute, such as green.

S213: The network device 202 forwards the service packet through the forwarding path corresponding to the segment list.

That the network device 202 forwards the service packet through the forwarding path corresponding to the segment list means that the network device 202 sends the service packet to the first network device on the forwarding path, and the network device and each network device on the forwarding path sequentially send the service packet to a next network device on the forwarding path according to an indication of the segment list. With reference to the application scenario shown in FIG. 1, the network device A sends the service packet 1 through a forwarding path corresponding to the SID list 2; in other words, the service packet 1 is sent by the network device A to the network device B, and is further sent by the network device E to the network device F. The network device F may continue to send the service packet 1 to the receiving device X based on that the final destination address of the service packet 1 is the receiving device X. The forwarding path including the network device A, the network device B, the network device C, the network device E, and the network device F is a forwarding path for a low delay, and matches the network performance requirement that is of the service packet 1 and that is imposed by the host. Therefore, the host is supported in directly imposing the network performance requirement, so that a manner of imposing the network performance requirement is more flexible.

FIG. 6 is a schematic diagram of a possible structure of the network device in the foregoing embodiment. A network device 600 may implement a function of the network device 202 in the embodiment shown in FIG. 2. As shown in FIG. 6, the network device 600 includes a receiving unit 601, a processing unit 602, and a sending unit 603. These units may perform corresponding functions of the network device in the foregoing method embodiment. For example:

The receiving unit 601 is configured to receive a first service packet from a host, where the first service packet includes a first identifier, and the first identifier is used to indicate a network performance requirement of the first service packet.

The processing unit 602 is configured to add a segment list to the first service packet based on an element to obtain a second service packet, where the element includes the first identifier, and a forwarding path corresponding to the segment list meets the network performance requirement.

The sending unit 603 is configured to forward the second service packet through the forwarding path.

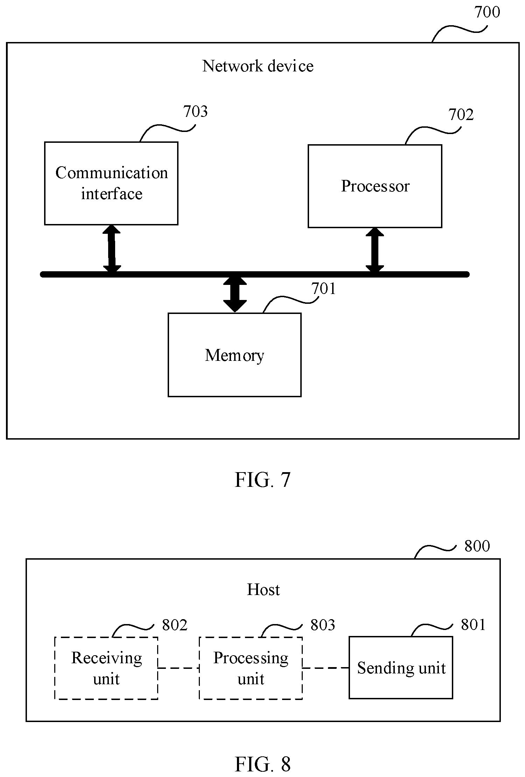

FIG. 7 is a schematic diagram of another possible structure of the network device 202 in the foregoing embodiment. A network device 700 includes a processor 702, a network interface 703, and a memory 701.

The memory 701 is configured to store instructions. When the embodiment shown in FIG. 6 is implemented and the units described in the embodiment in FIG. 6 are implemented by using software, software or program code required for performing functions of the processing unit 602 in FIG. 6 is stored in the memory 701.

The processor 702 is configured to execute the instructions in the memory 701 to perform the foregoing packet sending method applied to the embodiment shown in FIG. 2. The processor 702 may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor 702 may implement or execute various logical blocks, modules, and circuits described with reference to content disclosed in the embodiments of the present invention. Alternatively, the processor may be a combination of processors implementing a computing function, for example, a combination of one or more microprocessors, or a combination of a DSP and a microprocessor.

The network interface 703 is configured to communicate with another network device. The network interface 703 may be an ethernet (Ethernet) interface, an asynchronous transfer mode (Asynchronous Transfer Mode, ATM) interface, or the like.

The network interface 703, the processor 702, and the memory 701 are connected to each other. For example: The network interface 703, the processor 702, and the memory 701 are connected to each other through a bus. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 7, but this does not mean that there is only one bus or only one type of bus.

In a specific embodiment, the processor 702 is configured to: receive a first service packet from a host by using the network interface 703, where the first service packet includes a first identifier, and the first identifier indicates a network performance requirement of the first service packet; add a segment list to the first service packet based on an element to obtain a second service packet, where the element includes the first identifier, and a forwarding path corresponding to the segment list meets the network performance requirement; and forward, by using the network interface 703, the second service packet through the forwarding path. For a detailed processing process of the processor 702, refer to the detailed descriptions of the processes S212 and S213 in the foregoing embodiment shown in FIG. 2. Details are not described herein again.

The network interface 703 is used by the network device 700 to receive and send a packet by using a network system. For a specific process, refer to the detailed descriptions of the processes S212 and S213 in the foregoing embodiment shown in FIG. 2. Details are not described herein again.

FIG. 8 is a schematic diagram of a possible structure of the host in the foregoing embodiment. A host 800 may implement a function of the host 201 in the embodiment shown in FIG. 2. As shown in FIG. 8, the network device 800 includes a sending unit 801. The unit may execute a corresponding function of the host in the foregoing method. For example:
The sending unit 801 is configured to send a first service packet to a network device, where the first service packet includes a first identifier, and the first identifier indicates a network performance requirement of the first service packet.

For example, the host 800 further includes a receiving unit 802. The unit may execute a corresponding function of the host in the foregoing method. For example:
The receiving unit 802 is configured to receive a control packet from the network device, where the control packet includes a second identifier, the first service packet includes a first segment identifier, the first segment identifier includes a locator field and a function field, the locator field includes an address of the network device, and the function field includes the first identifier and the second identifier.

For example, the host 800 further includes a processing unit 803. The unit may execute a corresponding function of the host in the example of the foregoing method. For example:
The processing unit 803 is configured to run a first application program and a second application program, where the first application program is different from the second application program, the first service packet is a service packet of the first application program, and a second service packet is a service packet of the second application program.

The sending unit 801 is further configured to send the second service packet to the network device, where the second service packet includes a third identifier, the third identifier indicates a network performance requirement of the second service packet, and the third identifier is different from the first identifier.

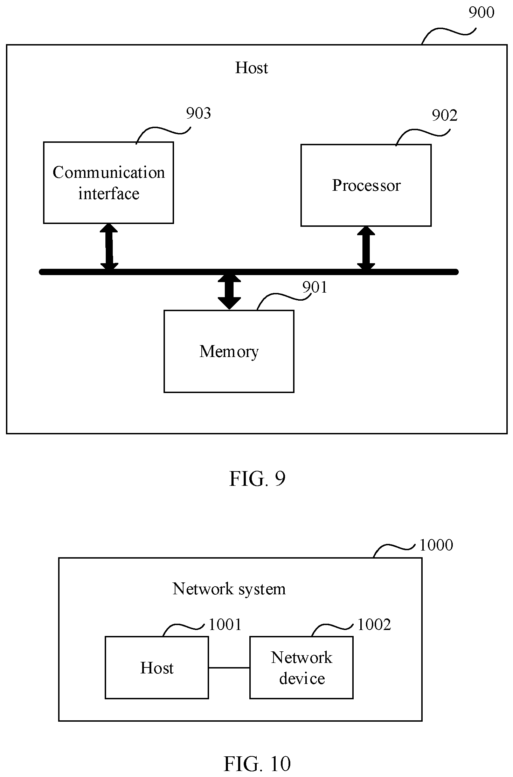

FIG. 9 is a schematic diagram of a possible structure of the host in the foregoing embodiment. A host 900 includes a processor 902, a network interface 903 and a memory 901.

The memory 901 is configured to store instructions. When the embodiment shown in FIG. 8 is implemented and the units described in the embodiment in FIG. 8 are implemented by using software, software or program code required for performing functions of the sending unit 801 in FIG. 8 is stored in the memory 901.

The processor 902 is configured to execute the instructions in the memory 901 to perform the foregoing packet sending method applied in the foregoing embodiment shown in FIG. 2. The processor 902 may be a CPU, a general-purpose processor, a DSP, an ASIC, an FPGA or another programmable logic device, a transistor logic device, a hardware component, or any combination thereof. The processor 902 may implement or execute various logical blocks, modules, and circuits described with reference to content disclosed in the embodiments of the present invention. Alternatively, the processor may be a combination of processors implementing a computing function, for example, a combination of one or more microprocessors, or a combination of a DSP and a microprocessor.

The network interface 903 is configured to communicate with another network device. The network interface 903 may be a wired interface or a wireless interface.

The network interface 903, the processor 902, and the memory 901 are connected to each other. For example: The network interface 903, the processor 902, and the memory 901 are connected to each other through a bus. The bus may be a PCI bus, an EISA bus, or the like. The bus may be classified into an address bus, a data bus, a control bus, and the like. For ease of representation, only one thick line is used to represent the bus in FIG. 9, but this does not mean that there is only one bus or only one type of bus.

In a specific embodiment, the processor 902 is configured to send a first service packet to a network device by using the network interface 903, where the first service packet includes a first identifier, and the first identifier indicates a network performance requirement of the first service packet. For a detailed processing process of the processor 902, refer to the detailed descriptions of the process S211 in the foregoing embodiment shown in FIG. 2. Details are not described herein again.

The network interface 903 is used by the host 900 to receive and send a packet by using a network system. For a specific process, refer to the detailed descriptions of the process S211 in the foregoing embodiment shown in FIG. 2. Details are not described herein again.

FIG. 10 is a schematic diagram of a possible structure of a network system according to an embodiment of the present invention. A network system 1000 includes a host 1001 and a network device 1002. The host 1001 in the network system may perform a processing step of the host 201 in the embodiment shown in FIG. 2, and the network device 1002 in the network system may perform a processing step of the network device 202 in the embodiment shown in FIG. 2. Correspondingly, the host 1001 in the network system may be the host 800 in the embodiment shown in FIG. 8, and the network device 1002 may be the network device 600 in the embodiment shown in FIG. 6; or correspondingly the host 1001 in the network system may be the host 900 in the embodiment shown in FIG. 9, and the network device 1002 may be the network device 700 in the embodiment shown in FIG. 7.

Specifically, the host is configured to send a first service packet to the network device, where the first service packet includes a first identifier, the first identifier indicates a network performance requirement of the first service packet.

The network device is configured to: receive a first service packet from the host, add a segment list to the first service packet based on an element to obtain a second service packet, and forward the second service packet through a forwarding path corresponding to the segment list, where the element includes the first identifier, and the forwarding path meets the network performance requirement.

An embodiment of the present invention further provides a non-transient storage medium, configured to store software instructions used in the foregoing embodiments. The non-transient storage medium includes a program used to perform the methods shown in the foregoing embodiments. When the program is executed on a computer or a network device, the computer or the network device is enabled to perform the methods in the foregoing method embodiments.

An embodiment of the present invention further provides a computer program product including computer program instructions. When the computer program product runs on a computer, a network node is enabled to perform the methods in the foregoing method embodiments.

The "first" in the first service packet, the first identifier, the first segment identifier, and the first application program mentioned in the embodiments of the present invention is merely used as a name identifier, and does not represent the first in terms of sequence. The rule also applies to "second", "third", "fourth", and the like.

It should be noted that any apparatus embodiment described above is merely an example. The units described as separate parts may or may not be physically separate, and parts displayed as units may or may not be physical units, may be located in one position, or may be distributed on a plurality of network units. Some or all of the modules may be selected based on an actual requirement to achieve the objectives of the solutions of the embodiments. In addition, in accompanying drawings of embodiments of the network device or the host provided by the present invention, connection relationships between modules indicate that the modules have communication connections with each other, which may be specifically implemented as one or more communication buses or signal cables. A person of ordinary skill in the art may understand and implement the embodiments without creative efforts.

Methods or algorithm steps described in the content disclosed in the embodiments of the present invention may be implemented by hardware, or may be implemented by a processor by executing software instructions. The software instructions may be formed by a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (Electrically EPROM, EEPROM), a hard disk, a removable hard disk, an optical disc, or any other form of storage medium well-known in the art. A storage medium is coupled to a processor, so that the processor can read information from the storage medium. Certainly, the storage medium may be a component of the processor.

The objectives, technical solutions, and benefits of the present invention are further described in detail in the foregoing specific implementations. It should be understood that the foregoing descriptions are merely specific implementations of the present invention, but are not intended to limit the protection scope of the present invention.

## Claims

1. A packet sending method, wherein the method comprises:
sending, by a network device, a control packet to a host, wherein the control packet comprises a second identifier;
receiving (S212), by the network device, a first service packet from the host, wherein the first service packet comprises a first segment identifier, the first segment identifier comprises a locator field and a function field, the locator field comprises an address of the network device, and the function field comprises a first identifier and the second identifier, and the first identifier indicates a network performance requirement of the first service packet and the value of the second identifier is used to indicate the function of receiving, by the network device, the network performance requirement;
adding, by the network device, a segment list to the first service packet based on the first identifier to obtain a second service packet, and a forwarding path corresponding to the segment list meets the network performance requirement; and
forwarding (S213), by the network device, the second service packet through the forwarding path.

2. The method according to claim 1, wherein the step of adding, by the network device, the segment list to the first service packet based on the first identifier to obtain a second service packet comprises adding the segment list to the first service packet based on the first identifier and a destination address of the first service packet.

3. The method according to claim 1 or 2, wherein a value of the first identifier indicates a color attribute value that is based on a service-level agreement requirement, wherein each service-level agreement requirement is represented by one color attribute value, and each color attribute value is mapped to one specific value, and a correspondence between the color attribute and the specific value is unified in an entire network.

4. The method of claim 1, wherein the method further comprises:
sending, by the host, the first service packet to the network device, wherein the first service packet comprises the first identifier, and the first identifier indicates the network performance requirement of the first service packet.

5. The method according to claim 4, wherein before the sending, by the host, the first service packet to the network device, the method further comprises:
receiving, by the host, the control packet from the network device, wherein the control packet comprises the second identifier.

6. The method according to claim 4 or 5, wherein the first service packet comprises a segment list, the segment list comprises the first segment identifier and a second segment identifier, and the second segment identifier comprises a destination address of the first service packet.

7. The method according to any one of claims 4 to 6, wherein a value of the first identifier indicates a color attribute value that is based on a service-level agreement requirement and that is corresponding to the network performance requirement wherein each service-level agreement requirement is represented by one color attribute value, and each color attribute value is mapped to one specific value, and a correspondence between the color attribute and the specific value is unified in an entire network, an argument value of the network performance requirement, and/or an identifier of a forwarding path.

8. The method according to any one of claims 4 to 7, wherein the host runs a first application program and a second application program, the first application program is different from the second application program, the first service packet is a service packet of the first application program, and a second service packet is a service packet of the second application program; and the method further comprises:
sending, by the host, the second service packet to the network device, wherein the second service packet comprises a third identifier, the third identifier indicates a network performance requirement of the second service packet, and the third identifier is different from the first identifier.

9. A network device (600), wherein the network device comprises:
a receiving module (601), configured to receive a first packet from a host, wherein the first service packet comprises a first identifier, and the first identifier indicates a network performance requirement of the first service packet;
a process module (602), configured to add a segment list to the first service packet based on the first identifier to obtain a second service packet, and a forwarding path corresponding to the segment list meets the network performance requirement; and
a sending module (603), configured to forward the second service packet through the forwarding path; wherein
the sending module (603) is further configured to send a control packet to the host, wherein the control packet comprises a second identifier; wherein
the first service packet comprises a first segment identifier, the first segment identifier comprises a locator field and a function field, the locator field comprises an address of the network device, and the function field comprises the first identifier and the second identifier and the value of the second identifier is used to indicate the function of receiving, by the host, the network performance requirement.

10. A network system (1000) comprising the network device (1002, 600) of claim 9 and a host (1001, 800), wherein the host comprises:
a sending module (801), configured to send the first packet to the network device, wherein the first service packet comprises the first identifier, and the first identifier indicates the network performance requirement of the first service packet.

11. The network system according to claim 10, wherein the host further comprises a receiving module;
the receiving module is configured to receive the control packet from the network device, wherein the control packet comprises the second identifier.

12. The network system according to claim 10 or 11, wherein the host further comprises a processing module;
the processing module is further configured to run a first application program and a second application program, wherein the first application program is different from the second application program, the first service packet is a service packet of the first application program, and a second service packet is a service packet of the second application program; and
the sending module is further configured to send the second service packet to the network device, wherein the second service packet comprises a third identifier, the third identifier indicates a network performance requirement of the second service packet, and the third identifier is different from the first identifier.

## Patentansprüche

1. Paketsendeverfahren, wobei das Verfahren Folgendes umfasst:
Senden eines Steuerpakets durch eine Netzwerkvorrichtung an einen Host, wobei das Steuerpaket eine zweite Kennung umfasst;
Empfangen (S212) eines ersten Servicepakets von dem Host durch die Netzwerkvorrichtung, wobei das erste Servicepaket eine erste Segmentkennung umfasst, die erste Segmentkennung ein Locator-Feld und ein Funktionsfeld umfasst, das Locator-Feld eine Adresse der Netzwerkvorrichtung umfasst und das Funktionsfeld eine erste Kennung und die zweite Kennung umfasst, und die erste Kennung eine Netzwerkleistungsanforderung des ersten Servicepakets angibt und der Wert der zweiten Kennung verwendet wird, um die Funktion des Empfangens der Netzwerkleistungsanforderung durch die Netzwerkvorrichtung anzugeben;
Hinzufügen einer Segmentliste durch die Netzwerkvorrichtung zu dem ersten Servicepaket basierend auf der ersten Kennung, um ein zweites Servicepaket zu erlangen, und ein Weiterleitungspfad entsprechend der Segmentliste die Netzwerkleistungsanforderung erfüllt; und
Weiterleiten (S213) des zweiten Servicepakets durch die Netzwerkvorrichtung über den Weiterleitungspfad.

2. Verfahren nach Anspruch 1, wobei der Schritt des Hinzufügens der Segmentliste zu dem ersten Servicepaket durch die Netzwerkvorrichtung basierend auf der ersten Kennung, um ein zweites Servicepaket zu erlangen, ein Hinzufügen der Segmentliste zu dem ersten Servicepaket basierend auf der ersten Kennung und einer Zieladresse des ersten Servicepakets umfasst.

3. Verfahren nach Anspruch 1 oder 2, wobei ein Wert der ersten Kennung einen Farbattributwert angibt, der auf einer Anforderung der Dienstgütevereinbarung basiert, wobei jede Anforderung der Dienstgütevereinbarung durch einen Farbattributwert dargestellt wird und jeder Farbattributwert einem spezifischen Wert zugeordnet wird und eine Entsprechung zwischen dem Farbattribut und dem spezifischen Wert in einem gesamten Netzwerk vereinheitlicht wird.

4. Verfahren nach Anspruch 1, wobei das Verfahren ferner Folgendes umfasst:
Senden des ersten Servicepakets durch den Host an die Netzwerkvorrichtung, wobei das erste Servicepaket die erste Kennung umfasst und die erste Kennung die Netzwerkleistungsanforderung des ersten Servicepakets angibt.

5. Verfahren nach Anspruch 4, wobei das Verfahren vor dem Senden der ersten Nachricht durch die zweite Netzwerkvorrichtung an die Netzwerkvorrichtung ferner Folgendes umfasst:
Empfangen des Steuerpakets durch den Host von der Netzwerkvorrichtung, wobei das Steuerpaket die zweite Kennung umfasst.

6. Verfahren nach Anspruch 4 oder 5, wobei das erste Servicepaket eine Segmentliste umfasst, die Segmentliste die erste Segmentkennung und eine zweite Segmentkennung umfasst und die zweite Segmentkennung eine Zieladresse des ersten Servicepakets umfasst.

7. Verfahren nach einem der Ansprüche 4 bis 6, wobei ein Wert der ersten Kennung einen Farbattributwert angibt, der auf einer Anforderung der Dienstgütevereinbarung basiert und der Netzwerkleistungsanforderung entspricht, wobei jede Anforderung der Dienstgütevereinbarung durch einen Farbattributwert dargestellt wird und jeder Farbattributwert einem bestimmten Wert zugeordnet wird und eine Entsprechung zwischen dem Farbattribut und dem spezifischen Wert in einem gesamten Netzwerk, einem Argumentwert der Netzwerkleistungsanforderung und/oder einer Kennung eines Weiterleitungspfads vereinheitlicht wird.

8. Verfahren nach einem der Ansprüche 4 bis 7, wobei der Host ein erstes Anwendungsprogramm und ein zweites Anwendungsprogramm ausführt, sich das erste Anwendungsprogramm von dem zweiten Anwendungsprogramm unterscheidet, das erste Servicepaket ein Servicepaket des ersten Anwendungsprogramms ist und ein zweites Servicepaket ein Servicepaket des zweiten Anwendungsprogramms ist; und wobei das Verfahren ferner Folgendes umfasst:
Senden des zweiten Servicepakets durch den Host an die Netzwerkvorrichtung, wobei das zweite Servicepaket eine dritte Kennung umfasst, die dritte Kennung eine Netzwerkleistungsanforderung des zweiten Servicepakets angibt und sich die dritte Kennung von der ersten Kennung unterscheidet.

9. Netzwerkvorrichtung (600), wobei die Netzwerkvorrichtung Folgendes umfasst:
ein Empfangsmodul (601), das dazu konfiguriert ist, ein erstes Paket von einem Host zu empfangen, wobei das erste Servicepaket eine erste Kennung umfasst und die erste Kennung eine Netzwerkleistungsanforderung des ersten Servicepakets angibt;
ein Prozessmodul (602), das dazu konfiguriert ist, dem ersten Servicepaket eine Segmentliste basierend auf der ersten Kennung hinzuzufügen, um ein zweites Servicepaket zu erlangen, und ein Weiterleitungspfad entsprechend der Segmentliste die Netzwerkleistungsanforderung erfüllt; und
ein Sendemodul (603), das dazu konfiguriert ist, das zweite Servicepaket über den Weiterleitungspfad weiterzuleiten; wobei das Sendemodul (603) ferner dazu konfiguriert ist, ein Steuerpaket an den Host zu senden, wobei das Steuerpaket eine zweite Kennung umfasst; wobei
das erste Servicepaket eine erste Segmentkennung umfasst, die erste Segmentkennung ein Locator-Feld und ein Funktionsfeld umfasst, das Locator-Feld eine Adresse der Netzwerkvorrichtung umfasst und das Funktionsfeld die erste Kennung und die zweite Kennung umfasst sowie der Wert der zweiten Kennung verwendet wird, um die Funktion des Empfangens der Netzwerkleistungsanforderung durch den Host anzugeben.

10. Netzwerksystem (1000), umfassend die Netzwerkvorrichtung (1002, 600) nach Anspruch 9 und einen Host (1001, 800), wobei der Host Folgendes umfasst:
ein Sendemodul (801), das dazu konfiguriert ist, das erste Paket an die Netzwerkvorrichtung zu senden, wobei das erste Servicepaket die erste Kennung umfasst und die erste Kennung die Netzwerkleistungsanforderung des ersten Servicepakets angibt.

11. Netzwerksystem nach Anspruch 10, wobei der Host ferner ein Empfangsmodul umfasst;
das Empfangsmodul dazu konfiguriert ist, das Steuerpaket von der Netzwerkvorrichtung zu empfangen, wobei das Steuerpaket die zweite Kennung umfasst.

12. Netzwerksystem nach Anspruch 10 oder 11, wobei der Host ferner ein Verarbeitungsmodul umfasst;
das Verarbeitungsmodul ferner dazu konfiguriert ist, ein erstes Anwendungsprogramm und ein zweites Anwendungsprogramm auszuführen, wobei sich das erste Anwendungsprogramm von dem zweiten Anwendungsprogramm unterscheidet, das erste Servicepaket ein Servicepaket des ersten Anwendungsprogramms ist und ein zweites Servicepaket ein Servicepaket des zweiten Anwendungsprogramms ist; und
das Sendemodul ferner dazu konfiguriert ist, das zweite Servicepaket an die Netzwerkvorrichtung zu senden, wobei das zweite Servicepaket eine dritte Kennung umfasst, die dritte Kennung eine Netzwerkleistungsanforderung des zweiten Servicepakets angibt und sich die dritte Kennung von der ersten Kennung unterscheidet.

## Revendications

1. Procédé d'envoi de paquets, dans lequel le procédé comprend :
l'envoi, par un dispositif de réseau, d'un paquet de contrôle à un hôte, dans lequel le paquet de contrôle comprend un deuxième identifiant ;
la réception (S212), par le dispositif de réseau, d'un premier paquet de service provenant de l'hôte, dans lequel le premier paquet de service comprend un premier identifiant de segment, le premier identifiant de segment comprend un champ de localisation et un champ de fonction, le champ de localisation comprend une adresse du dispositif de réseau, et le champ de fonction comprend un premier identifiant et le deuxième identifiant, et le premier identifiant indique une exigence de performance de réseau du premier paquet de service et la valeur du deuxième identifiant est utilisée pour indiquer la fonction de réception, par le dispositif de réseau, de l'exigence de performance de réseau ;
l'ajout, par le dispositif de réseau, d'une liste de segments au premier paquet de service sur la base du premier identifiant pour obtenir un second paquet de service, et un chemin de transmission correspondant à la liste de segments répond à l'exigence de performance de réseau ; et
la transmission (S213), par le dispositif de réseau, du second paquet de service à travers le chemin de transmission.

2. Procédé selon la revendication 1, dans lequel l'étape d'ajout, par le dispositif de réseau, de la liste de segments au premier paquet de service sur la base du premier identifiant pour obtenir un second paquet de service comprend l'ajout de la liste de segments au premier paquet de service sur la base du premier identifiant et d'une adresse de destination du premier paquet de service.

3. Procédé selon la revendication 1 ou 2, dans lequel une valeur du premier identifiant indique une valeur d'attribut de couleur qui est basée sur une exigence d'accord de niveau de service, dans lequel chaque exigence d'accord de niveau de service est représentée par une valeur d'attribut de couleur, et chaque valeur d'attribut de couleur est mappée à une valeur spécifique, et une correspondance entre l'attribut de couleur et la valeur spécifique est unifiée dans un réseau entier.

4. Procédé selon la revendication 1, dans lequel le procédé comprend également :
l'envoi, par l'hôte, du premier paquet de service au dispositif de réseau, dans lequel le premier paquet de service comprend le premier identifiant, et le premier identifiant indique l'exigence de performance de réseau du premier paquet de service.

5. Procédé selon la revendication 4, dans lequel avant l'envoi, par l'hôte, du premier paquet de service au dispositif de réseau, le procédé comprend également :
la réception, par l'hôte, du paquet de contrôle provenant du dispositif de réseau, dans lequel le paquet de contrôle comprend le deuxième identifiant.

6. Procédé selon la revendication 4 ou 5, dans lequel le premier paquet de service comprend une liste de segments, la liste de segments comprend le premier identifiant de segment et un deuxième identifiant de segment, et le deuxième identifiant de segment comprend une adresse de destination du premier paquet de service.

7. Procédé selon l'une quelconque des revendications 4 à 6, dans lequel une valeur du premier identifiant indique une valeur d'attribut de couleur qui est basée sur une exigence d'accord de niveau de service et qui correspond à l'exigence de performance de réseau, dans lequel chaque exigence d'accord de niveau de service est représentée par une valeur d'attribut de couleur, et chaque valeur d'attribut de couleur est mappée à une valeur spécifique, et une correspondance entre l'attribut de couleur et la valeur spécifique est unifiée dans un réseau entier, une valeur d'argument de l'exigence de performance de réseau, et/ou un identifiant d'un chemin de transmission.

8. Procédé selon l'une quelconque des revendications 4 à 7, dans lequel l'hôte exécute un premier programme d'application et un second programme d'application, le premier programme d'application est différent du second programme d'application, le premier paquet de service est un paquet de service du premier programme d'application, et un second paquet de service est un paquet de service du second programme d'application ; et le procédé comprend également :
l'envoi, par l'hôte, du second paquet de service au dispositif de réseau, dans lequel le second paquet de service comprend un troisième identifiant, le troisième identifiant indique une exigence de performance de réseau du second paquet de service, et le troisième identifiant est différent du premier identifiant.

9. Dispositif de réseau (600), dans lequel le dispositif de réseau comprend :
un module de réception (601), configuré pour recevoir un premier paquet provenant d'un hôte, dans lequel le premier paquet de service comprend un premier identifiant, et le premier identifiant indique une exigence de performance de réseau du premier paquet de service ;
un module de traitement (602), configuré pour ajouter une liste de segments au premier paquet de service sur la base du premier identifiant pour obtenir un second paquet de service, et un chemin de transmission correspondant à la liste de segments répond à l'exigence de performance de réseau ; et
un module d'envoi (603), configuré pour transmettre le second paquet de service à travers le chemin de transmission ; dans lequel
le module d'envoi (603) est également configuré pour envoyer un paquet de contrôle à l'hôte, dans lequel le paquet de contrôle comprend un deuxième identifiant ; dans lequel
le premier paquet de service comprend un premier identifiant de segment, le premier identifiant de segment comprend un champ de localisation et un champ de fonction, le champ de localisation comprend une adresse du dispositif de réseau, et le champ de fonction comprend le premier identifiant et le deuxième identifiant et la valeur du deuxième identifiant est utilisée pour indiquer la fonction de réception, par l'hôte, de l'exigence de performance de réseau.

10. Système de réseau (1000) comprenant le dispositif de réseau (1002, 600) selon la revendication 9 et un hôte (1001, 800), dans lequel l'hôte comprend :
un module d'envoi (801), configuré pour envoyer le premier paquet au dispositif de réseau, dans lequel le premier paquet de service comprend le premier identifiant, et le premier identifiant indique l'exigence de performance de réseau du premier paquet de service.

11. Système de réseau selon la revendication 10, dans lequel l'hôte comprend également un module de réception ;
le module de réception est configuré pour recevoir le paquet de contrôle provenant du dispositif de réseau, dans lequel le paquet de contrôle comprend le deuxième identifiant.

12. Système de réseau selon la revendication 10 ou 11, dans lequel l'hôte comprend également un module de traitement ;
le module de traitement est également configuré pour exécuter un premier programme d'application et un second programme d'application, dans lequel le premier programme d'application est différent du second programme d'application, le premier paquet de service est un paquet de service du premier programme d'application, et un second paquet de service est un paquet de service du second programme d'application ; et
le module d'envoi est également configuré pour envoyer le second paquet de service au dispositif de réseau, dans lequel le second paquet de service comprend un troisième identifiant, le troisième identifiant indique une exigence de performance de réseau du second paquet de service, et le troisième identifiant est différent du premier identifiant.
